# EUROPÄISCHE PATENTSCHRIFT

(11) **EP 2 070 250 B1**
(45) Veröffentlichungstag und Bekanntmachung des Hinweises auf die Patenterteilung: **30.08.2017**
(21) Anmeldenummer: 07803214.1
(22) Anmeldetag: 04.09.2007
(51) Int. Cl.: H04L 9/00, G06Q 10/00

(54) **VERFAHREN ZUR PERSONALISIERUNG VON DOKUMENTEN, KRYPTOGRAPHISCHES SYSTEM, PERSONALISIERUNGSSYSTEM UND DOKUMENT**
METHOD FOR PERSONALIZING DOCUMENTS, CRYPTOGRAPHIC SYSTEM, PERSONALIZATION SYSTEM AND DOCUMENT
PROCÉDÉ DE PERSONNALISATION DE DOCUMENTS, SYSTÈME CRYPTOGRAPHIQUE, SYSTÈME DE PERSONNALISATION ET DOCUMENT

(30) Priorität: 18.09.2006 DE 102006044322
(43) Veröffentlichungstag der Anmeldung: 17.06.2009
(73) Patentinhaber: Bundesdruckerei GmbH, 10985 Berlin (DE)
(72) Erfinder: Nguyen, Kim, 10437 Berlin (DE)
(74) Vertreter: Richardt Patentanwälte PartG mbB
(86) Internationale Anmeldenummer: PCT/EP2007/059250
(87) Internationale Veröffentlichungsnummer: WO 2008/034719

(56) Entgegenhaltungen:
- WO-A-00/69113
- WO-A-02/45336
- WO-A2-01/59720
- DE-A1-102004 008 841
- DE-U1- 20 100 158
- US-B1- 6 367 011
- D. KÜGLER: "Risiko Reisepass?" C'T - MAGAZIN FÜR COMPUTERTECHNIK, Nr. 5, 2005, Seiten 84-89, XP002469157
- "SmartMX platform features" PHILIPS ELECTRONICS N.V.: SHORT FORM SPECIFICATION 9397 750 XXXXX, [Online] Nr. Rev1.0, 24. März 2004 (2004-03-24), XP002469706 Gefunden im Internet: URL:http://www.nxp.com/acrobat_download/ot her/identification/095710.pdf> [gefunden am 2008-02-14]
- BUNDESAMT FÜR SICHERHEIT IN DER INFORMATIONSTECHNIK: "Digitale Sicherheitsmerkmale im elektronischen Reisepass"[Online] 2005, Seiten 1-4, XP002469267 Gefunden im Internet: URL:http://www.bsi.de/fachthem/epass/Siche rheitsmerkmale.pdf> [gefunden am 2008-02-14]
- SOPPERA A ET AL: "Wireless identification - privacy and security" BT TECHNOLOGY JOURNAL, KLUWER ACADEMIC PUBLISHERS, DO, Bd. 23, Nr. 4, 1. Oktober 2005 (2005-10-01), Seiten 54-64, XP019218859 ISSN: 1573-1995

## Beschreibung

Die Erfindung betrifft ein Verfahren zur Personalisierung von Dokumenten, insbesondere von Wert- oder Sicherheitsdokumenten, sowie ein kryptographisches System, ein Personalisierungssystem und ein Dokument mit einem integrierten elektronischen Schaltkreis, insbesondere ein Wert- oder Sicherheitsdokument.

Dokumente mit einem integrierten elektronischen Schaltkreis sind aus dem Stand der Technik an sich in verschiedener Form bekannt. Beispielsweise gibt es solche Dokumente in überwiegend papierbasierter Form, wie zum Beispiel als elektronischen Reisepass, oder als Chipkarte, insbesondere als so genannte Smart Card, in kontaktbehafteter, kontaktloser oder Dual-Interface Ausführung.

Insbesondere sind verschiedene Funk-Erkennungssysteme für solche Dokumente aus dem Stand der Technik bekannt, die auch als Radio Frequency Identification (RFID) Systeme bezeichnet werden. Vorbekannte RFID-Systeme beinhalten im Allgemeinen zumindest einen Transponder und eine Sende-Empfangseinheit. Der Transponder wird auch als RFID-Etikett, RFID-Chip, RFID-Tag, RFID-Label oder Funketikett bezeichnet; die Sende-Empfangseinheit wird auch als Lesegerät oder Reader bezeichnet. Ferner ist oft die Integration mit Servern, Diensten und sonstigen Systemen, wie zum Beispiel Kassensystemen oder Warenwirtschaftssystemen über eine so genannte Middle Ware vorgesehen.

Die auf einem RFID-Transponder gespeicherten Daten werden über Radiowellen verfügbar gemacht. Bei niedrigen Frequenzen geschieht dies induktiv über ein Nahfeld, bei höheren Frequenzen über ein elektromagnetisches Fernfeld. Die Entfernung, über die ein RFID-Transponder angesprochen und ausgelesen werden kann, schwankt aufgrund der Ausführung (passiv / aktiv), dem benutzten Frequenzband, der Sendestärke und anderen Umwelteinflüssen zwischen wenigen Zentimetern und mehr als einem Kilometer.

Ein RFID-Transponder beinhaltet üblicherweise einen Mikrochip und eine Antenne, die in einem Träger oder Gehäuse untergebracht oder auf ein Substrat aufgedruckt sind. Aktive RFID-Transponder verfügen ferner über eine Energiequelle, wie zum Beispiel eine Batterie.

RFID-Transponder sind für verschiedene Dokumente einsetzbar, insbesondere in Chipkarten, beispielsweise zur Realisierung einer elektronischen Geldbörse oder für Electronic Ticketing, oder werden in Papier, wie zum Beispiel in Wert- und Sicherheitsdokumenten, insbesondere Banknoten und Ausweisdokumenten, integriert.

Aus der DE 201 00 158 U1 ist beispielsweise eine Identifikations- und Sicherheitskarte aus laminierten und / oder gespritzten Kunststoffen bekannt, die einen integrierten Halbleiter mit einer Antenne zur Durchführung eines RFID-Verfahrens beinhaltet. Aus der DE 10 2004 008 841 A1 ist ferner ein buchartiges Wertdokument, wie zum Beispiel ein Passbuch bekannt geworden, welches eine Transpondereinheit beinhaltet.

Solche Sicherheits- oder Wertdokumente werden im Stand der Technik zum Teil als Chipkarten realisiert. Diese können mit einer kontaktbehafteten oder kontaktlosen Schnittstelle, beispielsweise einem RFID-Interface, ausgestattet sein oder mit einer Schnittstelle, die sowohl eine drahtgebundene als auch eine drahtlose Kommunikation mit einem Chipkarten-Terminal zulässt. Im letzteren Fall spricht man auch von so genannten Dual-Interface Chipkarten. Chipkarten-Kommunikationsprotokolle und - verfahren für kontaktlose Karten sind zum Beispiel in der Norm ISO 14443 festgelegt.

Ein Nachteil solcher Dokumente mit RFID-Funktionalität ist, dass ohne Einverständnis des Trägers des Dokuments die RFID-Schnittstelle angesprochen werden kann, wenn sich das Dokument beispielsweise in der Brieftasche des Trägers befindet. Schutzmechanismen zum Schutz gegen unbefugtes Auslesen der Daten aus einem solchen Dokument werden auch als "Basic Access Control" bezeichnet, und wurden von der International Civil Aviation Organisation (ICAO) standardisiert.

Darüber hinaus hat die ICAO bzw. die EU auch Verfahren zur so genannten Extended Access Control (EAC) und zur Active Authentication (AA) spezifiziert. Durch solche Verfahren soll das Auslesen von sensitiven Daten, die in dem RFID Chip des Dokuments gespeichert sind, besonders geschützt werden (EAC) bzw. die Authentizität des Chips im Pass nachgewiesen werden (AA) . Insbesondere biometrische Daten, wie z.B. Fingerabdruckdaten, sollen so vor unberechtigten Zugriffen geschützt werden.

Aus dem Stand der Technik sind verschiedene Verfahren bekannt, Daten unter kryptographischem Schutz elektronisch zu speichern. Eine in den vergangenen zwei Jahrzehnten zu großer Verbreitung gelangte Form geschützter Speicher sind elektronische Chipkarten, die durch ISO 7816 Teil 1 bis 4 genormt sind. Zu den Anwendungsgebieten der Chipkartentechnologie gehören auch maschinenlesbare Reisedokumente (Machine Readable Travel Documents - MRTD).

Bei der sicheren Speicherung personenbezogener Daten in maschinenlesbaren Reisedokumenten stehen sich das Ziel der Erleichterung von Sicherheitskontrollen durch eine möglichst grosse Zahl staatlicher und nichtstaatlicher Organisationen und die Schutzwürdigkeit personenbezogener Daten vor unberechtigtem Auslesen gegenüber. Eine angemessene Balance zwischen beiden Anforderungen hat sowohl Unterschieden datenschutzrechtlicher Art als auch unterschiedlicher Schutzwürdigkeit einzelner Datenobjekte Rechnung zu tragen.

Aus der US 2005/0097320 A1 ist ein System bekannt, welche eine Kommunikation zwischen einem Anwender und einer Institution, beispielsweise einer Bank, ermöglicht. Die Kommunikation erfolgt über ein Netzwerk. Bei jedem Zugriff des Anwenders auf das System der Institution erfolgt ein "transaction risk assessment", bei dem das Risiko der aktuellen Transaktion ermittelt wird.

Aus der US 2002/0087894 A1 ist ein ähnliches System bekannt, bei dem der Anwender selbst die Sicherheitsstufe für den Datentransfer wählt.

Aus den zum Anmeldezeitpunkt unveröffentlichten DE 10 2005 025 806 und DE 10 2006 027 253 derselben Anmelderin, deren Offenbarungsgehalt durch Bezugnahme vollumfänglich in den Offenbarungsgehalt der vorliegenden Patentanmeldung aufgenommen wird, sind maschinenlesbare Dokumente bekannt, in denen durch eine in dem integrierten Schaltkreis des Dokuments gespeicherte Zuordnungstabelle für verschiedene in dem integrierten Schaltkreis gespeicherte Datenobjekte spezifiziert ist, welches kryptographische Protokoll zur Erfüllung einer Zugriffsbedingung zum externen Auslesen des betreffenden Datenobjekts erfüllt sein muss. Hierbei können auch asymmetrische kryptographische Protokolle zum Einsatz kommen, die ein Schlüsselpaar bestehend aus einem öffentlichen Schlüssel und einem privatem Schlüssel erfordern.

Ein im Stand der Technik für die Massenproduktion von Dokumenten, insbesondere MRTDs, bislang ungelöstes Problem ist die effiziente und sichere Personalisierung der Dokument-Rohlinge unter Einbeziehung eines privaten Schlüssels.

WO 02/45336A betrifft ein Verfahren zum Verteilen zum Schlüsseln im Bereich von PayTV. WO 00/69113 A betrifft Smartcards, wobei ein einzelner privater Schlüssel zur gemeinsamen Nutzung an eine Vielzahl unterschiedlicher Geräte wie Telefone, Computer und PDAs verteilt wird.

Von den DE 10 2005 025 806 und DE 10 2006 027 253 als nächstkommendem Stand der Technik ausgehend liegt der Erfindung daher die Aufgabe zugrunde, ein Verfahren für eine effiziente und zugleich sichere Personalisierung von Dokumenten unter Einbeziehung eines privaten Schlüssels zu schaffen sowie ein kryptographisches System, ein Personalisierungssystem und ein entsprechendes Dokument.

Aus WO 00/69113 ist ein kryptografisches Verfahren zur sicheren Verteilung und zum Schutz kryptografischer Schlüsselinformationen bekannt.

Aus WO 02/45336 A1 ist ein Verfahren zur sicheren Erzeugung und Auslieferung von Zertifikaten bekannt, wobei asymmetrische öffentliche und private Schlüssel verteilt werden.

Aus D. KÜGLER "Risiko Reisepass?", C'T - MAGAZIN FÜR COMPUTERTECHNIK, Nr. 5, 2005, Seiten 84-89 sind Reisepässe mit einem per Funk auslesbaren Radiofrequenz (RF)-Chip bekannt.

Aus "SmartMX platform features", PHILIPS ELECTRONICS N.V.: SHORT FORMED SPECIFICATION 9397, Rev.1.0, 24. März 2004 ist eine Smartcard IC-Architektur bekannt, die eine Implementierung von Betriebssystemen, einschließlich Java Card GlobalPlatform, ermöglicht.

Aus WO 01/59720 A2 ist ein System und ein Verfahren zur Personalisierung von Smartkarten bekannten sowie auch US 6,367,011 B1.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Erfindungsgemäß wird ein Verfahren zur Personalisierung von Dokumenten geschaffen, wobei jedes der Dokumente einen integrierten elektronischen Schaltkreis aufweist. Das erfindungsgemäße Verfahren umfasst die folgenden Schritte: Empfang von Eingangsdaten für die Personalisierung der Dokumente durch ein Computersystem einer Hochsicherheitsumgebung, Erzeugung eines Schlüsselpaars bestehend aus einem öffentlichen und einem privaten Schlüssel für jedes der Dokumente, Erzeugung einer Datenstruktur aus den Eingangsdaten und einem der öffentlichen Schlüssel für jedes der Dokumente, Erzeugung von Steuerdaten zur Personalisierung der Dokumente mit jeweils einer der Datenstrukturen und dem der betreffenden Datenstruktur zugeordneten privaten Schlüssel, Übertragung der Steuerdaten von dem Computersystem an eine Personalisierungsvorrichtung einer Produktionsumgebung, Übertragung der Datenstrukturen und der jeweils zugeordneten privaten Schlüssel von der Personalisierungsvorrichtung an die Dokumente durch Ausführung der Steuerdaten, Speicherung der Datenstrukturen jeweils in einem Speicherbereich des integrierten elektronischen Schaltkreises, wobei die Speicherung unter einer Zugriffsbedingung erfolgt, Speicherung des privaten Schlüssels, der der jeweiligen Datenstruktur zugeordnet ist, in einem Speicherbereich des integrierten elektronischen Schaltkreises, wobei die Speicherung so erfolgt, dass kein externer Zugriff auf den privaten Schlüssel möglich ist.

Das erfindungsgemäße Verfahren ist besonders vorteilhaft, da die innerhalb der Hochsicherheitsumgebung ablaufenden Verfahrensschritte und die in der Produktionsumgebung ablaufenden Verfahrensschritte weitgehend unabhängig voneinander sind. Insbesondere ermöglicht die Erfindung die Erzeugung der Steuerdaten in der Hochsicherheitsumgebung in einem zu der eigentlichen Personalisierung der Dokument-Rohlinge in der Produktionsumgebung asynchron ablaufenden Prozess.

Nach einer Ausführungsform der Erfindung beinhalten die Eingangsdaten des Computersystems ein oder mehrere Bestelldateien von Behörden für die Erstellung von Ausweisdokumenten. Dabei kann eine einzige Bestelldatei z.B. bis zu 1000 Anträge beinhalten.

Ein Eingangsdatensatz der Eingangsdaten für die Bestellung eines Ausweisdokuments beinhaltet typischerweise persönliche Daten, wie zum Beispiel den Namen, die Anschrift und die Größe derjenigen Person, für die das Ausweisdokument bestellt wird, sowie biometrische Daten, wie zum Beispiel ein Gesichtsbild und/oder weitere biometrische Daten, insbesondere Fingerabdruckdaten und/oder Iris-Scan-Daten und/oder andere sensitive, schutzbedürftige Daten. Insbesondere die biometrischen Daten können unterschiedliche Grade der Schutzbedürftigkeit aufweisen.

So sind insbesondere die Daten eines Gesichtbildes nicht oder wenig schutzbedürftig, wohingegen Fingerabdruckdaten eine erhöhte Schutzbedürftigkeit haben, da sie ohne Einwilligung der betreffenden Person im Normalfall nicht oder nur schwer zu erlangen sind.

Die Übertragung der Eingangsdaten von einem Behördenserver an das erfindungsgemäße Computersystem erfolgt vorzugsweise durch eine gesicherte Übertragung, insbesondere über OSCI (Online Service Computer Interface).

Nach Einspeisung der Eingangsdaten in die Hochsicherheitsumgebung wird für jedes zu produzierende Dokument eine vorgegebene Datenstruktur instanziiert. Diese Datenstruktur hat eine Reihe vordefinierter Datenfelder für die Personalisierungsdaten. Vorzugsweise kommt eine standardisierte Datenstruktur zur Anwendung, wie zum Beispiel eine durch die ICAO standardisierte Logical Data Structure (LDS), wie sie beispielsweise in der Spezifikation LDS 1.7-2004-05-18 veröffentlicht ist, vgl. dort insbesondere Figur V-1 auf Seite 16.

Für jedes der zu produzierenden Dokumente wird in der Hochsicherheitsumgebung ein Schlüsselpaar bestehend aus einem öffentlichen und einem privaten Schlüssel generiert. Der öffentliche Schlüssel wird zusammen mit den anderen Personalisierungsdaten in die Datenstruktur eingetragen. Vorzugsweise wird jedoch der zugehörige private Schlüssel nicht in die Datenstruktur eingetragen, da dieser separat behandelt wird. Aus der Datenstruktur und dem zugehörigen privaten Schlüssel werden Steuerdaten für die Personalisierung eines Dokument-Rohlings generiert, mit denen eine Personalisierungsvorrichtung angesteuert werden kann. Solche Steuerdaten werden für sämtliche der zu produzierenden Dokumente generiert. Unter "Dokument-Rohling" wird hier jedes Vorprodukt des herzustellenden Dokuments verstanden, bei dem dessen integrierter elektronischer Schaltkreis noch nicht personalisiert ist. Der integrierte elektronische Schaltkreis kann bei seiner Personalisierung bereits in das Dokument integriert sein oder er wird nach der Personalisierung in das Dokument eingebracht.

Die Steuerdaten werden dann einzeln oder in einem Datenpaket zusammengefasst an eine Personalisierungsvorrichtung übertragen, die sich in einer Produktionsumgebung befindet. Bei der Personalisierungsvorrichtung handelt es sich vorzugsweise um eine Personalisierungsanlage zur massenhaften Personalisierung von Dokument-Rohlingen. Beispielsweise wird die Personalisierungsanlage stapelweise mit Dokument-Rohlingen beschickt, die dann der Reihe nach mit möglichst hohem Durchsatz durch die Personalisierungsanlage durchlaufen, um dort personalisiert zu werden.

Nach einer Ausführungsform der Erfindung werden mit dem Steuerdatensatz lediglich die Personalisierungsinformationen übergeben, d.h. die jeweilige Datenstruktur und der dazugehörige private Schlüssel. Die Personalisierungsvorrichtung verfügt über ein Steuerprogramm, das die Personalisierung auf Basis des Steuerdatensatzes dann entsprechend durchführt.

Nach einer Ausführungsform der Erfindung handelt es sich bei den Steuerdaten um von der Personalisierungsvorrichtung ausführbare Anweisungen, insbesondere in Form eines so genannten Personalisierungskripts.

Die Personalisierungsvorrichtung führt für jeden durchlaufenden Dokument-Rohling einen Steuerdatensatz aus, so dass der betreffende Dokument-Rohling entsprechend personalisiert wird. Von besonderem Vorteil für die Massenproduktion ist dabei, dass eine Zuordnung der Personalisierungsdaten zu einem der Dokument-Rohlinge erst unmittelbar bei dem Personalisierungsvorgang erfolgt. Dies vereinfacht den Produktionsprozess erheblich, da sonst sichergestellt sein müsste, dass ein bestimmter Steuerdatensatz genau dann von der Personalisierungsanlage ausgeführt wird, wenn ein ganz bestimmter Dokument-Rohling für die Personalisierung ansteht.

Durch Ausführung eines Steuerdatensatzes wird also eine der Datenstrukturen und der dazugehörige private Schlüssel zu dem integrierten elektronischen Schaltkreis des gerade zur Personalisierung anstehenden Dokument-Rohlings übertragen. Der integrierte elektronische Schaltkreis dieses Dokument-Rohlings speichert dann die mit der Datenstruktur erhaltenen Personalisierungsdaten in entsprechenden Speicherbereichen, die den Datenfeldern der Datenstruktur zugeordnet sind.

Die Speicherung der Personalisierungsdaten kann mit verschiedenen Zugriffsbedingungen erfolgen, die erfüllt sein müssen, damit ein externer Zugriff auf die Personalisierungsdaten erfolgen kann. Beispielsweise ist der Zugriff auf den Namen und die Anschrift des Trägers des Dokuments ohne weitere Zugriffsbedingung möglich, da diese Angaben ohnehin auf dem Dokument aufgedruckt sind. Dagegen können für verschiedene schutzwürdige weitere Personalisierungsdaten, insbesondere biometrische Datenobjekte, andere Zugriffsbedingungen definiert sein. Beispielsweise werden die Fingerabdruckdaten mit einer Zugriffsbedingung abgespeichert, wonach ein externer Lesezugriff nur dann erfolgen kann, wenn ein asymmetrisches kryptographisches Protokoll unter Einbeziehung des privaten Schlüssels des Dokuments erfolgreich abgearbeitet worden ist.

Aufgrund der Ausführung des Steuerdatensatzes wird auch der zu der Datenstruktur gehörende private Schlüssel von der Personalisierungsvorrichtung an den integrierten elektronischen Schaltkreis des Dokuments übertragen. Der private Schlüssel wird in einem Speicherbereich des integrierten elektronischen Schaltkreises mit der Zugriffsbedingung "niemals" abgespeichert, d.h. ein externer Zugriff auf den privaten Schlüssel ist grundsätzlich unmöglich.

Nach einer Ausführungsform der Erfindung erfüllt die Hochsicherheitsumgebung die gesetzlichen Anforderungen an ein so genanntes Trust-Center. Die Produktionsumgebung kann dagegen weniger strengen Sicherheitsanforderungen unterliegen, insbesondere um dem Produktionspersonal, welches auch bei weitgehender Automatisierung benötigt wird, den Zutritt zu ermöglichen.

Nach einer Ausführungsform der Erfindung ist das Computersystem mit einer kryptographischen Einheit verbunden. Bei der kryptographischen Einheit kann es sich um einen so genannten Schlüsselgenerator zur Erzeugung der Schlüsselpaare bestehend aus öffentlichen und privaten Schlüsseln handeln.

Nach einer Ausführungsform der Erfindung wird ein Ende-zu-Ende Verschlüsselungsverfahren angewendet, um die Übertragung der privaten Schlüssel von der kryptographischen Einheit zu den integrierten elektronischen Schaltkreisen der Dokument-Rohlinge zu schützen. Hierzu werden die privaten Schlüssel so verschlüsselt, dass nur die integrierten elektronischen Schaltkreise der Dokument-Rohlinge diese privaten Schlüssel wieder entschlüsseln können. Dagegen können weder das Computersystem noch die Personalisierungsvorrichtung die von der kryptographischen Einheit gelieferten verschlüsselten privaten Schlüssel entschlüsseln.

Nach einer Ausführungsform der Erfindung ist die Ende-zu-Ende-Verschlüsselung in der kryptographischen Einheit mit Hilfe eines in der kryptographischen Einheit gespeicherten geheimen symmetrischen Schlüssels realisiert. Derselbe geheime symmetrische Schlüssel liegt auch in den integrierten elektronischen Schaltkreisen der Dokument-Rohlinge vor. Dieser symmetrische Schlüssel kann beispielsweise in die Betriebssysteme der integrierten elektronischen Schaltkreise integriert sein, und zwar so, dass er nicht aus dem integrierten elektronischen Schaltkreis ausgelesen werden kann.

Nachdem ein Schlüsselpaar erzeugt worden ist, verschlüsselt also die kryptographische Einheit den privaten Schlüssel mit Hilfe des symmetrischen Schlüssels. Das erzeugte Chiffrat des privaten Schlüssels wird zusammen mit dem öffentlichen Schlüssel an das Computersystem übergeben. Das Computersystem bindet den öffentlichen Schlüssel in die Datenstruktur ein und erzeugt aus der Datenstruktur und dem Chiffrat des privaten Schlüssels einen Steuerdatensatz für die Personalisierungsvorrichtung. Bei der Personalisierung empfängt ein integrierter elektronischer Schaltkreis einer der Dokument-Rohlinge die Datenstruktur mit dem Chiffrat des privaten Schlüssels. Mit Hilfe des symmetrischen Schlüssels entschlüsselt dann der integrierte elektronische Schaltkreis das Chiffrat, so dass er den privaten Schlüssel erhält, der dann mit der Zugriffsbedingung "niemals" abgespeichert wird.

Nach einer Ausführungsform der Erfindung erfolgt die Übertragung der Personalisierungsdaten, d.h. der Datenstruktur und des privaten Schlüssels, von der Personalisierungsvorrichtung an den integrierten elektronischen Schaltkreis des gerade zur Personalisierung anstehenden Dokument-Rohlings mit Hilfe eines Secure Messaging Verfahrens. Hierdurch wird dem Umstand Rechnung getragen, dass diese Übertragung der Personalisierungsdaten innerhalb der Produktionsumgebung erfolgt, die weniger stringenten Sicherheitsauflagen unterliegt als die Hochsicherheitsumgebung.

Als Secure Messaging Verfahren kann ein auf symmetrischen Schlüsseln mit oder ohne Randomisierung oder ein auf dynamischen symmetrischen Schlüsseln basierendes Verfahren eingesetzt werden. Die dynamischen symmetrischen Schlüssel können beispielsweise aus hardwarespezifischen Merkmalen abgeleitet werden, wie zum Beispiel aus der Seriennummer des betreffenden integrierten elektronischen Schaltkreises.

Ferner können Secure Messaging Verfahren eingesetzt werden, die auf dynamischen symmetrischen Schlüsseln mit symmetrischer Schlüsselaushandlung oder asymmetrischer Schlüsselaushandlung beruhen. Im Rahmen des statischen Secure Messaging kann zusätzlich zur Verschlüsselung der übertragenen Daten eine Authentisierung der übertragenden Application Protocol Data Unit (APDU) mittels eines symmetrischen Signaturalgorithmus (Message Authentication Code - MAC) zum Einsatz kommen.

Die MAC-Berechnung kann dabei einerseits statisch erfolgen oder aber randomisiert, zum Beispiel durch den Einsatz eines variablen Initial Chain Values (ICV), der zuvor von dem integrierten elektronischen Schaltkreis des zu personalisierenden Dokument-Rohlings von der Personalsierungsvorrichtung abgefordert wurde. Diese Randomisierung bewirkt, dass ein Angreifer auch nach Abführen der APDU-Sequenz, mit der unter anderem der private Schlüssel von der Personalisierungsvorrichtung zu dem integrierten elektronischen Schaltkreis übertragen wird, keine Replay-Attacke fahren kann, da der Angreifer nicht in der Lage ist, den abgeforderten Zufallswert, d.h. die ICV, zu reproduzieren.

Nach einer Ausführungsform der Erfindung handelt es sich bei den integrierten elektronischen Schaltkreisen um RFIDs. Die vorliegende Erfindung ist aber keinesfalls auf RFIDs beschränkt, sondern kann auch für andere kontaktbehaftete, kontaktlose oder Dual-Mode-Schnittstellen eingesetzt werden.

In einem weiteren Aspekt betrifft die Erfindung ein kryptographisches System Mitteln zum Empfang von Eingangsdaten für die Personalisierung der Dokumente, Mitteln zur Erzeugung eines Schlüsselpaars bestehend aus einem öffentlichen und einem privaten Schlüssel für jedes der Dokumente, Mitteln zur Erzeugung einer Datenstruktur aus den Eingangsdaten und einem der öffentlichen Schlüssel für jedes der Dokumente und Mitteln zur Erzeugung der Steuerdaten aus den Datenstrukturen und den jeweils zugeordneten privaten Schlüsseln.

In einem weiteren Aspekt betrifft die Erfindung ein Personalisierungssystem, insbesondere eine weitgehend automatisierte Personalisierungsanlage für die massenhafte Personalisierung von Dokument-Rohlingen. Das Personalisierungssystem umfasst Mittel zum Empfang von Steuerdaten, wobei die Steuerdaten Datenstrukturen mit jeweils einem öffentlichen Schlüssel und einem dem jeweiligen öffentlichen Schlüssel zugeordneten privaten Schlüssel beinhalten, und Mittel zur Übertragung der Datenstrukturen und der jeweils zugeordneten privaten Schlüssel an die Dokumente durch Ausführung der Steuerdaten, so dass die Datenstrukturen jeweils in einem Speicherbereich des integrierten elektronischen Schaltkreises eines zu personalisierenden Dokuments mit einer Zugriffsbedingung erfolgt, und der private Schlüssel in einen Speicherbereich des integrierten elektronischen Schaltkreises so gespeichert wird, dass kein externer Zugriff auf den privaten Schlüssel möglich ist.

In einem weiteren Aspekt betrifft die Erfindung ein Dokument, insbesondere ein Wert-oder Sicherheitsdokument, wie zum Beispiel ein maschinenlesbares Reisedokument, insbesondere einen Reisepass, einen Personalausweis oder ein Visum, oder einen Firmenausweis, eine Kreditkarte, einen Führerschein, einen Berechtigungsnachweis oder dergleichen

Das Dokument hat eine Schnittstelle zum Empfang einer Datenstruktur von einer Personalisierungsvorrichtung, wobei die Datenstruktur einen öffentlichen Schlüssel und einen zu dem öffentlichen Schlüssel gehörenden privaten Schlüssel beinhaltet, Mittel zur Speicherung der Datenstruktur in einem Speicherbereich, wobei die Speicherung unter einer Zugriffsbedingung erfolgt, und Mittel zur Speicherung des privaten Schlüssels in einem Speicherbereich, wobei die Speicherung so erfolgt, dass kein externer Zugriff auf den privaten Schlüssel möglich ist.

Beispielsweise sind in dem integrierten elektronischen Schaltkreis des Dokuments schutzbedürftige Daten abgespeichert, wie zum Beispiel biometrische Daten, auf die mit einem Lesegerät extern nur zugegriffen werden kann, nachdem ein kryptographisches Protokoll basierend auf dem in dem Dokument gespeicherten privaten Schlüssel abgearbeitet worden ist.

Im Weiteren werden Ausführungsformen der Erfindung mit Bezugnahme auf die Zeichnung näher erläutert. Es zeigen:
- Figur 1: ein Blockdiagramm einer ersten Ausführungsform eines erfindungsgemäßen kryptographischen Systems,
- Figur 2: ein Flussdiagramm einer ersten Ausführungsform eines erfindungsgemäßen Verfahrens,
- Figur 3: ein Blockdiagramm einer weiteren Ausführungsform eines erfindungsgemäßen kryptographischen Systems,

Elemente bzw. Schritte der nachfolgenden Figuren, die einander entsprechen, sind jeweils mit den gleichen Bezugszeichen gekennzeichnet.

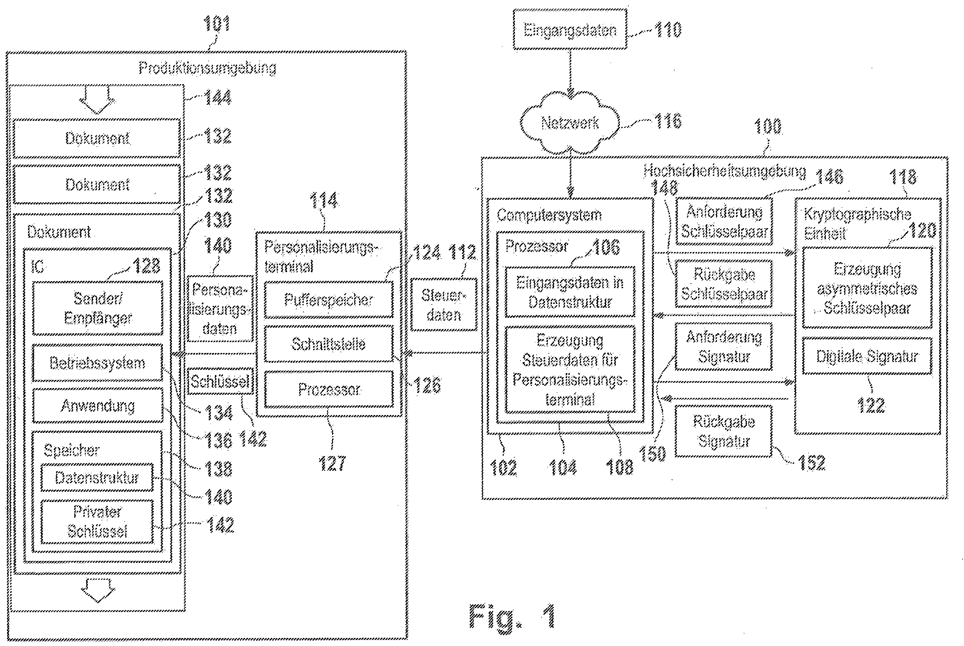

Die Figur 1 zeigt ein Produktionssystem für die Produktion von Dokument-Rohlingen. Das Produktionssystem besteht aus einer Hochsicherheitsumgebung 100, welche insbesondere als so genanntes Trust-Center ausgebildet sein kann, und einer Produktionsumgebung 101, die weniger strengen Sicherheitsanforderungen unterliegen kann, als die Hochsicherheitsumgebung 100. in der Hochsicherheitsumgebung 100 befindet sich ein Computersystem 102 mit zumindest einem Prozessor 104 zur Ausführung von Programminstruktionen 106 und 108.

Die Programminstruktionen 106 dienen zur Instanziierung einer vorgegebenen Datenstruktur mit Eingangsdaten 110. Bei der Datenstruktur kann es sich um eine standardisierte Datenstruktur handeln, wie zum Beispiel eine Logical Data Structure, wie sie von der ICAO spezifiziert worden ist.

Die Programminstruktionen 108 dienen zur Erzeugung von Steuerdaten 112 für ein Personalisierungsterminal 114. Die Steuerdaten 112 beinhalten ausführbare Instruktionen für das Personalisierungsterminal 114 sowie die eigentlichen Personalisierungsdaten. Die Steuerdaten 112 werden beispielsweise in Form eines so genannten Skriptes durch die Programminstruktionen 108 generiert.

Die Eingangsdaten 110 werden beispielsweise von einem Behördenserver über ein Netzwerk 116, vorzugsweise über eine geschützte Netzwerkverbindung, empfangen und in das Computersystem 102 eingespeist.

Die Eingangsdaten 110 beinhalten beispielsweise eine Anzahl von N Eingangsdatensätzen für die Bestellung einer entsprechenden Anzahl von N Dokumenten.

In der Hochsicherheitsumgebung 100 befindet sich ferner eine kryptographische Einheit 118. Die kryptographische Einheit 118 beinhaltet einen so genannten Schlüsselgenerator 120 zur Erzeugung asymmetrischer Schlüsselpaare jeweils In der Hochsicherheitsumgebung 100 befindet sich ferner eine kryptographische Einheit 118. Die kryptographische Einheit 118 beinhaltet einen so genannten Schlüsselgenerator 120 zur Erzeugung asymmetrischer Schlüsselpaare jeweils bestehend aus einem öffentlichen Schlüssel und einem dazugehörigen privaten Schlüssel. Ferner beinhaltet die kryptographische Einheit 118 eine Komponente 122 zur Erzeugung einer digitalen Signatur mit Hilfe eines privaten Schlüssels des Betreibers der Hochsicherheitsumgebung 100, wie zum Beispiel der Bundesdruckerei GmbH.

Das Personalisierungsterminal 114 hat einen Pufferspeicher 124 zur Speicherung der Steuerdaten 112 so lange, bis diese zur Ausführung durch den Prozessor 127 an der Reihe sind. Beispielsweise funktioniert der Pufferspeicher 124 nach dem First-in-First-Out (FIFO)-Prinzip.

Das Personalisierungsterminal 114 hat ferner eine Schnittstelle 126 zum Aufbau einer Kommunikationsverbindung mit einer entsprechenden Schnittstelle 128 eines integrierten elektronischen Schaltkreises 130 eines Dokument-Rohlings 132. Beispielsweise handelt es sich bei dem integrierten elektronischen Schaltkreis 130 um einen RFID-Chip, so dass die Schnittstellen 126 und 128 jeweils als RFID Sender und Empfänger ausgebildet sind. Der integrierte elektronische Schaltkreis 130 hat ein Betriebssystem 134 und kann eine Anwendung 136 ausführen. Ein elektronischer Speicher 138 des integrierten elektronischen Schaltkreises 130 dient zur Speicherung der in der Datenstruktur beinhalteten Personalisierungsdaten 140 sowie des dazugehörigen privaten Schlüssels 142.

Nach einer Ausführungsform der Erfindung ist das Betriebssystem 134 so ausgebildet, dass eine unberechtigte Veränderung oder Entfernung der Anwendung 136 nicht möglich ist und der Zugriff auf die Personalisierungsdaten 140 nur über die Anwendung 136 möglich ist. Dadurch wird gewährleistet, dass der beispielsweise durch die Anwendung 136 implementierte Schutz der Personalisierungsdaten 140 nicht von unberechtigter Seite umgangen oder gebrochen werden kann.

Die Anwendung 136 kann beispielsweise als so genanntes Applet, insbesondere als Java-Applet ausgebildet sein. Durch das Betriebssystem 134 kann eine virtuelle Java-Maschine zur Verfügung gestellt werden. Insbesondere kann das Dokument 132 prinzipiell entsprechend der DE 10 2005 025 806 und/oder der DE 10 2006 027 253 aufgebaut sein.

Zur Beschickung des Personalisierungsterminals 114 mit Dokument-Rohlingen 132 beinhaltet die Produktionsumgebung 101 eine Fördereinrichtung 144 mit der die Dokument-Rohlinge 132 beispielsweise einzeln und nacheinander zu dem Personalisierungsterminal 114 transportiert werden. Der Dokument-Rohling 132, der sich aktuell an oder in dem Personalisierungsterminal 114 befindet, wird durch Aufbau einer Kommunikationsverbindung zwischen den Schnittstellen 126 und 128 sowie die Übersendung der Personalisierungsdaten 140 und des privaten Schlüssels 142 personalisiert.

Aufgrund des Empfangs der Personalisierungsdaten 140 werden diese nämlich durch die Anwendung 136 in den elektronischen Speicher 138 geschrieben. Dabei wird jeweils eine Zugriffsbedingung für diese Personalisierungsdaten 140 festgelegt. Entsprechend verhält es sich für den privaten Schlüssel 142, für den die Zugriffsbedingung "niemals" definiert wird, so dass grundsätzlich kein externer Zugriff auf den privaten Schlüssel möglich ist.

Aufgrund des Empfangs eines Eingangsdatensatzes mit den Eingangsdaten 110 generiert das Computersystem 102 eine Anforderung 146 für ein Schlüsselpaar, wobei diese Anforderung 146 an die kryptographische Einheit 118 gerichtet wird. Die kryptographische Einheit 118 generiert daraufhin mit Hilfe des Schlüsselgenerators 120 ein solches Schlüsselpaar 148 und übergibt dieses Schlüsselpaar an das Computersystem 102.

Mit den in dem Eingangsdatensatz angegebenen Personalisierungsdaten und dem öffentlichen Schlüssel des Schlüsselpaars 148 wird dann durch Ausführung der Programminstruktionen 106 die vordefinierte Datenstruktur instanziiert. Das Computersystem 102 richtet daraufhin eine Anforderung 150 an die kryptographische Einheit 118 für eine digitale Signatur der instanziierten Datenstruktur.

Eine solche digitale Signatur 152 wird durch die Komponente 122 der kryptographischen Einheit 118 generiert und an das Computersystem 102 übergeben.

Aus der instanziierten und signierten Datenstruktur sowie dem privaten Schlüssel des Schlüsselpaars 148 wird dann durch die Ausführung der Programminstruktionen 108 ein Steuerdatensatz für die Personalisierung eines Dokument-Rohlings 132 generiert.

Dieser einzelne Steuerdatensatz kann dann in Form von Steuerdaten 112 von dem Computersystem 102 an das Personalisierungsterminal 114 über eine Kommunikationsverbindung oder per Datenträger übergeben werden. Es ist jedoch auch möglich, das seitens des Computersystems 102 zunächst eine größere Anzahl von Steuerdatensätzen, beispielsweise für sämtliche der N Eingangsdatensätze generiert wird, bevor diese insgesamt als Steuerdaten 112 an das Personalisierungsterminal 114 übergeben werden.

Erforderlichenfalls werden die Steuerdaten 114, die eine oder mehrere Steuerdatensätze beinhalten, zunächst in dem Pufferspeicher 124 abgelegt. Die Steuerdatensätze werden der Reihe nach von dem Prozessor 127 abgearbeitet. Zur Ausführung eines bestimmten Steuerdatensatzes wird zwischen den Schnittstellen 126 und 128 des aktuell an oder in dem Personalisierungsterminal 114 befindlichen Dokument-Rohlings 132 eine Kommunikationsverbindung aufgebaut.

Hierüber werden die in dem Steuerdatensatz beinhalteten Personalisierungsdaten 140 und der private Schlüssel 142 des Schlüsselpaars 148 übertragen. Durch die Anwendung 136 werden die Personalisierungsdaten 140 in dem elektronischen Speicher 138 jeweils unter Festlegung der Zugriffsbedingung abgespeichert sowie auch der private Schlüssel 142, der mit der Zugriffsbedingung "niemals" abgespeichert wird.

Die Zugriffsbedingungen können je nach der Schutzbedürftigkeit einer Personalisierungsinformation 140 unterschiedlich sein, wie zum Beispiel "ungeschützt", "geschützt durch ein symmetrisches Authentisierungsverfahren" oder "geschützt durch ein asymmetrisches Authentisierungsverfahren". Im letzteren Fall ist für den Zugriff auf das betreffende Datenobjekt der Personalisierungsdaten 140, wie zum Beispiel die Fingerabdruckdaten, von einem externen Lesegerät zunächst ein vordefiniertes kryptographisches Protokoll durchzuführen, welches den privaten Schlüssel 142 involviert. Auf diesen wird von der Anwendung 136 bei der Abarbeitung des kryptographischen Protokolls zugegriffen.

Die den Personalisierungsinformationen jeweils zugeordneten Zugriffsbedingungen können in einer Zugriffstabelle der Anwendung festgelegt sein. Die Anwendung speichert dann die einzelnen Personalisierungsinformationen mit der jeweiligen Zugriffsbedingung ab.

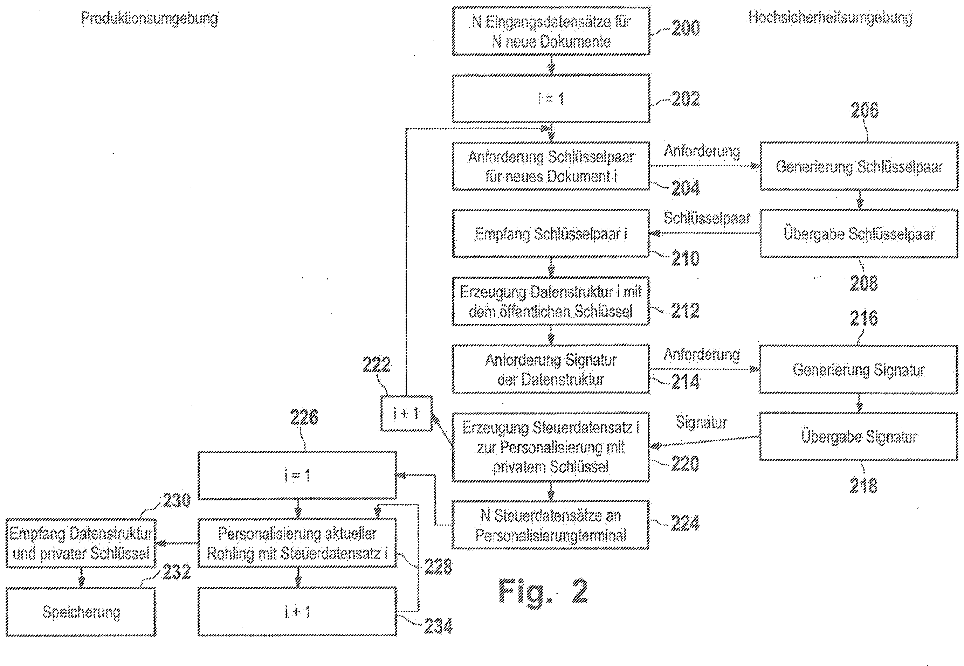

Die Figur 2 zeigt ein entsprechendes Flussdiagramm.

In dem Schritt 200 wird eine Anzahl von N Eingangsdatensätzen für die Produktion von N neuen Dokumenten in die Hochsicherheitsumgebung eingespeist. In dem Schritt 202 initialisiert das Computersystem der Hochsicherheitsumgebung einen Laufindex i.

In dem Schritt 204 erzeugt das Computersystem eine Anforderung für ein Schlüssel paar zur Personalisierung eines Dokuments i. Aufgrund dieser Anforderung generiert die kryptographische Komponente in dem Schritt 206 ein Schlüsselpaar i und übergibt dieses in dem Schritt 208 an das Computersystem, welches das Schlüsselpaar in dem Schritt 210 empfängt.

In dem Schritt 212 instanziiert das Computersystem eine vorgegebene Datenstruktur mit Hilfe des Eingangsdatensatzes i und dem öffentlichen Schlüssel des Schlüsselpaares i. In dem Schritt 214 fordert das Computersystem eine Signatur dieser Datenstruktur an, so dass die kryptographische Komponente in dem Schritt 216 eine solche Signatur generiert und in dem Schritt 218 an das Computersystem übergibt.

In dem Schritt 220 generiert das Computersystem mindest einem Steuerdatensatz i zur Personalisierung eines Dokument-Rohlings mit dem in der instanziierten Datenstruktur i beinhalteten Personalisierungsdaten und dem privaten Schlüssel des Schlüsselpaars i. Danach wird der Index i in dem Schritt 222 inkrementiert und die Ablaufsteuerung geht zu dem Schritt 204 zurück. Diese Schleife wird so lange durchlaufen, bis für alle N neuen Dokumente die erforderlichen Steuerdatensätze generiert worden sind.

Danach werden die Steuerdatensätze in dem Schritt 224 aus der Hochsicherheitsumgebung in die Produktionsumgebung übertragen und in das Personalisierungsterminal eingegeben. Dort wird ein Index i in dem Schritt 226 initialisiert und in dem nachfolgenden Schritt 228 wird ein erster Dokument-Rohling durch Ausführung des ersten Steuerdatensatzes personalisiert. Hierdurch empfängt der Dokument-Rohling in dem Schritt 230 die instanziierte und signierte Datenstruktur sowie den privaten Schlüssel.

Nach Prüfung der Signatur der Datenstruktur werden die in der Datenstruktur beinhalteten Personalisierungsdaten unter Definition einer Zugriffsbedingung gespeichert sowie auch der private Schlüssel (Schritt 232). In dem Schritt 234 wird der Index i durch das Personalisierungsterminal inkrementiert, so dass anschließend der nächste Dokument-Rohling durch Ausführung des nächsten Steuerdatensatzes personalisiert wird.

Vorzugsweise erfolgt die Übertragung der Steuerdatensätze von dem Computersystem an das Personalisierungsterminal mit einer solchen Rate, dass der Pufferspeicher des Personalisierungsterminals niemals ganz leer ist, um eine Verlangsamung des Produktionsprozesses zu verhindern.

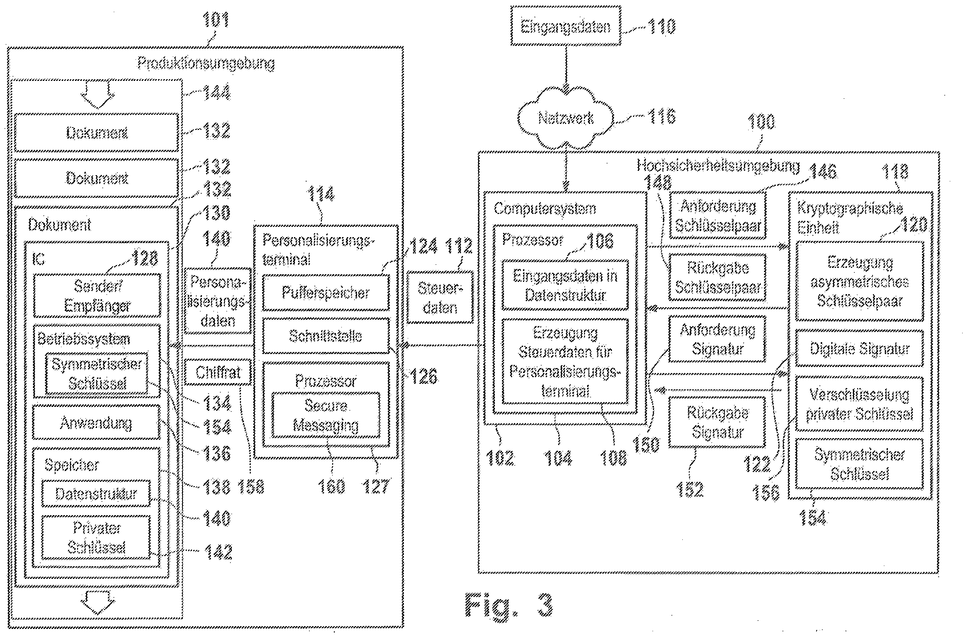

Die Figur 3 zeigt ein Blockdiagramm einer weiteren Ausführungsform eines erfindungsgemäßen Produktionssystems. Im Unterschied zu der Ausführungsform der Figur 1 beinhaltet die kryptographische Einheit 118 gemäß der Ausführungsform der Figur 3 einen geheimen symmetrischen Schlüssel 154, der auch in dem integrierten elektronischen Schaltkreis 130 gespeichert ist, wie zum Beispiel als integraler Bestandteil des Betriebssystems 134.

Die kryptographische Einheit 118 hat ferner eine Verschlüsselungskomponente 156 zur Verschlüsselung des privaten Schlüssels eines zuvor von dem Schlüsselgenerator 120 erzeugten Schlüsselpaars mit Hilfe des symmetrischen Schlüssels 154. Bei dieser Ausführungsform wird also aufgrund der Anforderung 146 zunächst von dem Schlüsselgenerator 120 ein Schlüsselpaar generiert. Dann wird im Unterschied zu der Ausführungsform der Figur 1 der private Schlüssel dieses Schlüsselpaars mit Hilfe des symmetrischen Schlüssels 154 durch die Verschlüsselungskomponente 156 verschlüsselt.

Das hieraus resultierende Chiffrat des privaten Schlüssels wird zusammen mit dem dazugehörigen öffentlichen Schlüssel als Schlüsselpaar 148 an das Computersystem 102 übergeben. Auf dieser Basis werden dann die Steuerdaten von dem Computersystem 102 generiert, so wie das auch bei der Ausführungsform der Figur 1 der Fall ist, mit dem Unterschied, dass das Computersystem 102 den privaten Schlüssel nicht im Klartext erhält und diesen auch nicht entschlüsseln kann, da es nicht über den hierfür erforderlichen symmetrischen Schlüssel 154 verfügt.

Gleiches gilt für das Personalisierungsterminal 114, welches ebenfalls nicht über den symmetrischen Schlüssel 154 verfügt. Die Entschlüsselung des Chiffrats 158 des privaten Schlüssels 142 erfolgt also erst nach Empfang der Personalisierungsdaten 140 und des Chiffrats 158 durch den integrierten elektronischen Schaltkreis 130. Das Chiffrat 158 wird durch das Betriebssystem 134 mit Hilfe des symmetrischen Schlüssels 154 entschlüsselt, so dass der so erhaltene private Schlüssel in dechriffierter Form in dem elektronischen Speicher 138 gespeichert werden kann.

Bei dieser Art der geschützten Übertragung des privaten Schlüssels 142 zwischen der kryptographischen Einheit 118 und dem integrierten elektronischen Schaltkreis 130 spricht man auch von einer so genannten Ende-zu-Ende-Verschlüsselung, da die dazwischen liegenden Elemente der Kommunikationskette, hier also das Computersystem 102 und das Personalisierungsterminal 114, das Chiffrat 158 nicht dechiffrieren können. Dies ist besonders vorteilhaft unter dem Gesichtspunkt des Datenschutzes, da weder das Computersystem 102 noch das Personalisierungsterminal 114 eine Kopie des privaten Schlüssels zurückbehalten können.

Für einen weiteren Schutz der Kommunikation zwischen dem Personalisierungsterminal 114 und dem integrierten elektronischen Schaltkreis 130 kann ein Secure Messaging Verfahren eingesetzt werden. Hierzu kann der Prozessor 127 des Personalisierungsterminals 114 entsprechende Instruktionen 160 aufweisen. Ferner kann das Betriebssystem 134 und/oder die Anwendung 136 die entsprechenden Schritte eines Secure Messaging (SM) Verfahrens beispielsweise unter Verwendung einer Absicherung der Authentizität der übertragenen Daten mittels eines MACs implementieren.

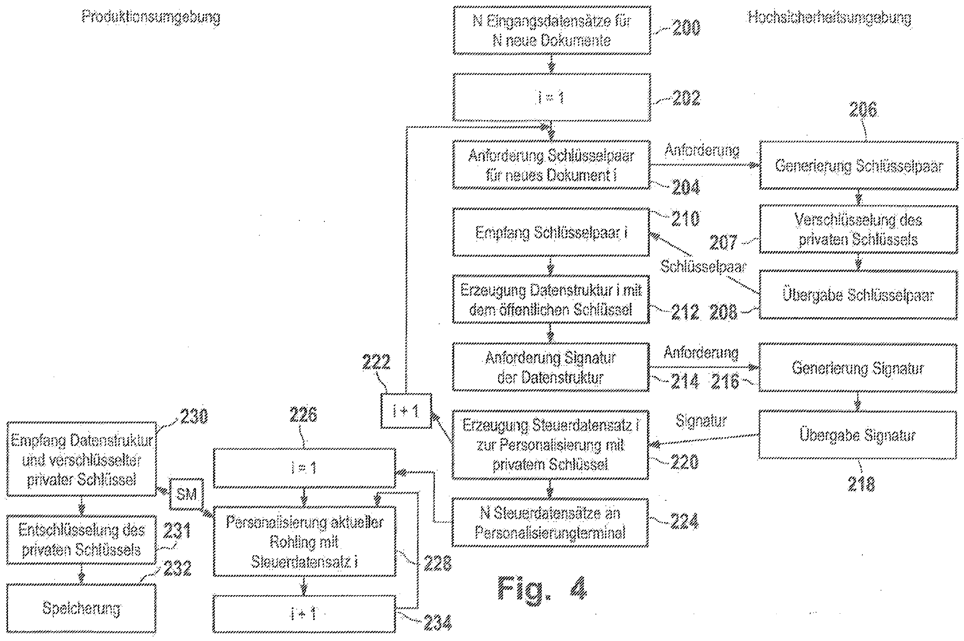

Die Figur 4 zeigt eine weitere Ausführungsform eines erfindungsgemäßen Verfahrens. Im Unterschied zu der Ausführungsform der Figur 2 wird in dem Schritt 207 nach der Generierung des Schlüsselpaars in dem Schritt 206 der private Schlüssel dieses Schlüsselpaars verschlüsselt. Hierzu kann ein statischer symmetrischer Schlüssel eingesetzt werden.

Das resultierende Schlüsselpaar, das in dem Schritt 208 an das Computersystem übergeben wird, beinhaltet also den öffentlichen Schlüssel im Klartext und den privaten Schlüssel nur in verschlüsselter Form. Die nachfolgenden Schritte 210 bis 230 werden so wie bei der Ausführungsform der Figur 2 durchgeführt, mit dem Unterschied, dass der verschlüsselte private Schlüssel anstelle des privaten Schlüssel im Klartext verarbeitet wird.

In dem Schritt 231 wird der verschlüsselte private Schlüssel durch den integrierten elektronischen Schaltkreis entschlüsselt, um dann die Personalisierungsdaten der instanziierten Datenstruktur und den privaten Schlüssel in dem nachfolgenden Schritt 232 zu speichern. Zur weiteren Absicherung der Datenübertragung kann die Kommunikation zwischen dem Dokument-Rohling und dem Personalisierungsterminal durch ein Secure Messaging Verfahren, insbesondere unter Verwendung eines MACs erfolgen.

### Bezugszeichenliste

- 100: Hochsicherheitsumgebung
- 101: Produktionsumgebung
- 102: Computersystem
- 104: Prozessor
- 106: Programminstruktionen
- 108: Programminstruktionen
- 110: Eingangsdaten
- 112: Steuerdaten
- 114: Personalisierungsterminal
- 116: Netzwerk
- 118: kryptographische Einheit
- 120: Schlüsselgenerator
- 122: Komponente
- 124: Pufferspeicher
- 126: Schnittstelle
- 127: Prozessor
- 128: Schnittstelle
- 130: integrierter elektronischer Schaltkreis
- 132: Dokument-Rohling
- 134: Betriebssystem
- 136: Anwendung
- 138: elektronischer Speicher
- 140: Personalisierungsdaten
- 142: privater Schlüssel
- 144: Fördereinrichtung
- 146: Anforderung
- 148: Schlüsselpaar
- 150: Anforderung
- 152: digitale Signatur
- 154: symmetrischer Schlüssel
- 156: Verschlüsselungskomponente
- 158: Chiffrat
- 160: Instruktionen

## Patentansprüche

1. Verfahren zur Personalisierung von Dokumenten (132), wobei jedes der Dokumente, einen integrierten elektronischen Schaltkreis (130) aufweist, mit folgenden Schritten:
- Empfang von Eingangsdaten (110) für die Personalisierung der Dokumente durch ein Computersystem (102) einer Hochsicherheitsumgebung (100),
- Erzeugung eines Schlüsselpaars bestehend aus einem öffentlichen und einem privaten Schlüssel (142) für jedes der Dokumente, wobei die Erzeugung des Schlüsselpaars durch eine kryptographische Einheit (118) der Hochsicherheitsumgebung erfolgt,
- Instanziierung einer vorgegebenen Datenstruktur bestehend aus den Eingangsdaten und einem der öffentlichen Schlüssel für jedes der Dokumente durch das Computersystem,
- Erzeugung einer digitalen Signatur (152) der instanziierten Datenstruktur durch die kryptographische Einheit (118),
- Erzeugung von Steuerdaten (112) zur Personalisierung der Dokumente mit jeweils einer der instanziierten und signierten Datenstrukturen und dem der betreffenden instanziierten Datenstruktur zugeordneten privaten Schlüssel durch das Computersystem,
- Übertragung der Steuerdaten von dem Computersystem an eine Personalisierungsvorrichtung (114) einer Produktionsumgebung (101),
- Übertragung der instanziierten und signierten Datenstrukturen und der jeweils zugeordneten privaten Schlüssel von der Personalisierungsvorrichtung an die Dokumente gemäß den Steuerdaten,
- Speicherung der Datenstrukturen jeweils in einem Speicherbereich (138) des integrierten elektronischen Schaltkreises nach Prüfung der Signaturen der Datenstrukturen, wobei die Speicherung unter einer Zugriffsbedingung erfolgt,
- Speicherung des privaten Schlüssels, der der jeweiligen Datenstruktur zugeordnet ist, in einem Speicherbereich (138) des integrierten elektronischen Schaltkreises, wobei die Speicherung so erfolgt, dass kein externer Zugriff auf den privaten Schlüssel möglich ist,
wobei ein Ende-zu-Ende Verschlüsselungsverfahren zwischen der kryptographischen Einheit und den integrierten elektronischen Schaltkreisen der Dokumente verwendet wird, um die Übertragung der jeweiligen privaten Schlüssel zu schützen, wobei in der kryptographischen Einheit ein symmetrischer Schlüssel (154) gespeichert ist, und wobei der private Schlüssel mit Hilfe des symmetrischen Schlüssels durch die kryptographische Einheit verschlüsselt wird, so dass nur der verschlüsselte private Schlüssel an das Computersystem übertragen wird, und wobei in den integrierten Schaltkreisen derselbe symmetrische Schlüssel gespeichert ist, um den jeweiligen privaten Schlüssel vor dessen Speicherung zu entschlüsseln.

2. Verfahren nach Anspruch 1, wobei der symmetrische Schlüssel in den integrierten elektronischen Schaltkreisen jeweils als integraler Bestandteil eines Betriebssystems (134) gespeichert ist.

3. Verfahren nach Anspruch 1 oder 2, wobei die Erzeugung der Steuerdaten einerseits und die Übertragung der instanziierten und signierten Datenstrukturen und der zugeordneten privaten Schlüssel andererseits asynchron erfolgt.

4. Verfahren nach einem der vorhergehenden Ansprüche, wobei die Übertragung der instanziierten und signierten Datenstrukturen und der jeweils zugeordneten privaten Schlüssel von der Personalisierungsvorrichtung an die Dokumente durch Anwendung eines Secure Messaging Verfahrens (160), insbesondere unter Verwendung eines Encryption und eines MAC Datenobjekts, geschützt erfolgt.

5. Kryptographisches System zur Erzeugung von Steuerdaten (112) für eine Personalisierungsvorrichtung (114) zur Personalisierung von Dokumenten (132) mit:
• Mitteln (120) einer Hochsicherheitsumgebung zur Erzeugung eines Schlüsselpaars bestehend aus einem öffentlichen und einem privaten Schlüssel für jedes der Dokumente, die eine kryptographischen Komponente (118, 120) zur Erzeugung des Schlüsselpaars aufweisen, wobei die kryptographische Komponente Mittel (156) zur Verschlüsselung der privaten Schlüssel aufweist, wobei in der kryptographischen Komponente ein symmetrischer Schlüssel (154) für die Verschlüsselung der privaten Schlüssel gespeichert ist, wobei die kryptographische Komponente Mittel (122) zur Erzeugung einer digitalen Signatur (152) aufweist,
• einem Computersystem der Hochsicherheitsumgebung umfassend
- Mitteln (102) zum Empfang von Eingangsdaten (110) für die Personalisierung der Dokumente,
- Mitteln (106) zur Instanziierung einer vorgegebenen Datenstruktur bestehend aus den Eingangsdaten und einem der öffentlichen Schlüssel für jedes der Dokumente,
- Mitteln (108) zur Erzeugung der Steuerdaten aus den instanziierten Datenstrukturen, welche signiert wurden, und den jeweils zugeordneten verschlüsselten privaten Schlüsseln,
• der Personalisierungsvorrichtung zur Personalisierung der Dokumente (132) umfassend
- Mittel (124) zum Empfang der Steuerdaten (112) von dem Computersystem,
- Mittel (126, 127; 160) zur Übertragung der instanziierten und signierten Datenstrukturen und der jeweils zugeordneten verschlüsselten privaten Schlüssel an die Dokumente durch Ausführung der Steuerdaten, so dass die Speicherung der instanziierten Datenstrukturen jeweils in einem Speicherbereich des integrierten elektronischen Schaltkreises eines zu personalisierenden Dokuments mit einer Zugriffsbedingung erfolgt, und der private Schlüssel in einen Speicherbereich des integrierten elektronischen Schaltkreises so gespeichert wird, dass kein externer Zugriff auf den privaten Schlüssel möglich ist,
• wobei jedes der Dokumente einen integrierten elektronischen Schaltkreis aufweist (130) und folgendes umfasst
- eine Schnittstelle (128) zum Empfang der jeweiligen instanziierten und signierten Datenstruktur (140) und des verschlüsselten privaten Schlüssels von der Personalisierungsvorrichtung (114),
- Mitteln (134, 136) zur Speicherung der in dern instanziierten und signierten Datenstrukturen beinhalteten Personalisierungsdaten in einem Speicherbereich (138) nach Prüfung der Signaturen der Datenstrukturen, wobei die Speicherung unter einer Zugriffsbedingung erfolgt,
- Mitteln (134, 154) zur Entschlüsselung des privaten Schlüssels,
- Mitteln (134, 136; 154) zur Speicherung des entschlüsseften privaten Schlüssels in einem Speicherbereich (138), wobei die Speicherung so erfolgt, dass kein externer Zugriff auf den privaten Schlüssel möglich ist.

6. Kryptographisches System nach Anspruch 5, wobei die Mittel zur Übertragung der Datenstrukturen und der jeweils zugeordneten privaten Schlüssel zur Ausführung eines Secure Messaging Verfahrens (160) ausgebildet sind, so dass die Übertragung der instanziierten und signierten Datenstrukturen und der jeweils zugeordneten verschlüsselten privaten Schlüssel von der Personalisierungsvorrichtung an die Dokumente geschützt erfolgt.

7. Kryptographisches System nach Anspruch 5 oder 6, wobei in einem Betriebssystem (134) des integrierten elektronischen Schaltkreises der symmetrische Schlüssel (154) für die Entschlüsselung des privaten Schlüssels (142) zur Verfügung steht.

8. Kryptographisches System nach Anspruch 5, 6 oder 7, mit Mitteln (134, 136) zur Ausführung eines Secure Messaging Verfahrens für einen geschützten Empfang der instanziierten und signierten Datenstrukturen und des privaten Schlüssels.

9. Kryptographisches System nach einem der vorhergehenden Ansprüche 5 bis 8, jedes der Dokumente ferner umfassend Mittel (134, 136) zur Ausführung eines kryptographischen Protokolls unter Verwendung des privaten Schlüssels, wobei die Durchführung des kryptographischen Protokolls Voraussetzung für einen externen Zugriff auf zumindest einen Teil der Personalisierungsdaten ist.

10. Kryptographisches System nach einem der vorhergehenden Ansprüche 5 bis 9, wobei es sich bei dem Dokument um ein Wert- oder Sicherheitsdokument, beispielsweise ein maschinenlesbares Reisedokument, insbesondere einen Reisepass, einen Personalausweis oder ein Visum, oder einen Firmenausweis, eine Kreditkarte, einen Führerschein oder einen Berechtigungsnachweis handelt.

## Claims

1. A method for personalising documents (132), wherein each of the documents has an integrated electronic circuit (130), said method comprising the following steps:
- receiving input data (110) for the personalisation of the documents by a computer system (102) of a high-security environment (100),
- generating a key pair consisting of a public key and a private key (142) for each of the documents, wherein the key pair is generated by a cryptographic unit (118) of the high-security environment,
- instantiating a predefined data structure consisting of the input data and one of the public keys for each of the documents by the computer system,
- generating a digital signature (152) of the instantiated data structure by the cryptographic unit (118),
- generating control data (112) for personalising the documents in each case with one of the instantiated and signed data structures and the private key assigned to the specific instantiated data structure in question by the computer system,
- transferring the control data from the computer system to a personalisation device (114) of a production environment (101),
- transferring the instantiated and signed data structures and the corresponding assigned private keys from the personalisation device to the documents in accordance with the control data,
- storing each of the data structures in a memory region (138) of the integrated electronic circuit after verifying the signatures of the data structures, wherein the storage is performed under an access condition,
- storing the private key assigned to the particular data structure in a memory region (138) of the integrated electronic circuit, wherein the storage is performed so that no external access to the private key is possible,
wherein an end-to-end encryption method is used between the cryptographic unit and the integrated electronic circuits of the documents in order to protect the transfer of the private key in question, wherein a symmetric key (154) is stored in the cryptographic unit, and wherein the private key is encrypted with the aid of the symmetric key by the cryptographic unit such that only the encrypted private key is transferred to the computer system, and wherein the same symmetric key is stored in the integrated circuits in order to decrypt the corresponding private key prior to the storage thereof.

2. The method according to claim 1, wherein the symmetric key is stored in the integrated electronic circuits in each case as an integral part of an operating system (134).

3. The method according to claim 1 or 2, wherein the generation of the control data on the one hand and the transfer of the instantiated and signed data structures and of the assigned private keys on the other hand are performed asynchronously.

4. The method according to any one of the preceding claims, wherein the instantiated and signed data structures and the respective assigned private keys are transferred in protected form from the personalisation device to the documents by use of a secure messaging method (160), in particular with use of an encryption and a MAC data object.

5. A cryptographic system for generating control data (112) for a personalisation device (114) for the personalisation of documents (132), comprising:
• means (120) of a high-security environment for generating a key pair consisting of a public and a private key for each of the documents, which means have a cryptographic component (118, 120) for generating the key pair, wherein the cryptographic component has means (156) for encrypting the private keys, wherein a symmetric key (154) for encrypting the private keys is stored in the cryptographic component, wherein the cryptographic component has means (122) for generating a digital signature (152),
• a computer system of the high-security environment comprising
- means (102) for receiving input data (110) for the personalisation of the documents,
- means (106) for instantiating a predefined data structure consisting of the input data and one of the public keys for each of the documents,
- means (108) for generating the control data from the instantiated data structures which have been signed and the corresponding assigned encrypted private keys,
• the personalisation device for personalising the documents (132) comprising
- means (124) for receiving the control data (112) from the computer system,
- means (126, 127, 160) for transferring the instantiated and signed data structures and the corresponding assigned encrypted private keys to the documents by executing the control data such that the instantiated data structures are each stored with an access condition in a memory region of the integrated electronic circuit of a document to be personalised and the private key is stored in a memory region of the integrated electronic circuit such that no external access to the private key is possible,
• wherein each of the documents has an integrated electronic circuit (130) and comprises the following
- an interface (128) for receiving the corresponding instantiated and signed data structure (140) and the encrypted private key from the personalisation device (114),
- means (134, 136) for storing the personalisation data contained in the instantiated and signed data structures in a memory region (138) after verifying the signatures of the data structures, wherein the storage is performed under an access condition,
- means (134, 154) for decrypting the private key,
- means (134, 136; 154) for storing the decrypted private key in a memory region (138), wherein the storage is performed such that no external access to the private key is possible.

6. The cryptographic system according to claim 5, wherein the means for transferring the data structures and the respective assigned private keys are designed to carry out a secure messaging method (160), such that the instantiated and signed data structures and the respective assigned encrypted private keys are transferred from the personalisation device to the documents in protected form.

7. The cryptographic system according to claim 5 or 6, wherein the symmetric key (154) is available in an operating system (134) of the integrated electronic circuit for the decryption of the private key (142).

8. The cryptographic system according to claim 5, 6 or 7, comprising means (134, 136) for carrying out a secure messaging method for protected receipt of the instantiated and signed data structures and of the private key.

9. The cryptographic system according to any one of preceding claims 5 to 8, each of the documents also comprising means (134, 136) for executing a cryptographic protocol with use of the private key, wherein the execution of the cryptographic protocol is a precondition for external access to at least some of the personalisation data.

10. The cryptographic system according to any one of preceding claims 5 to 9, wherein the document is a document of value or a security document, for example a machine-readable travel document, in particular a passport, a personal identity card, or a visa, or a company identity card, a credit card, a driver's licence, or a proof of authority.

## Revendications

1. Procédé de personnalisation de documents (132), où chacun des documents présente un circuit électronique (130) intégré, avec les étapes suivantes :
- réception de données d'entrée (110) pour la personnalisation des documents par un système informatique (102) d'un environnement hautement sécurisé (100),
- création d'une paire de clés constituée d'une clé publique et d'une clé privée (142) pour chacun des documents, où la création de la paire de clés est effectuée par une unité cryptographique (118) de l'environnement hautement sécurisé,
- instanciation d'une structure de données prédéfinie constituée des données d'entrée et d'une des clés publiques pour chacun des documents par le système informatique,
- création d'une signature numérique (152) des données de structure instanciées par l'unité cryptographique (118),
- création de données de commande (112) pour la personnalisation des documents avec chaque fois une des données de structure instanciée et signée et la clé privée associée à la structure de données instanciée concernée par le système informatique,
- transmission des données de commande du système informatique vers un dispositif de personnalisation (114) d'un environnement de production (101),
- transmission des structures de données instanciées et signées et des clés privées associées respectives du dispositif de personnalisation vers les documents selon les données de commande,
- stockage des structures de données chaque fois dans une région de mémoire (138) du circuit électronique intégré après vérification des signatures des structures de données, où le stockage a lieu moyennant une condition d'accès,
- stockage de la clé privée qui est associée à la structure de données respective dans une région de mémoire (138) du circuit électronique intégré, où le stockage a lieu de telle façon qu'aucun accès externe n'est possible sur la clé privée,
où un procédé de cryptage de bout en bout entre l'unité cryptographique et les circuits électroniques intégrés des documents est employé afin de protéger la transmission des clés privées respectives, où une clé symétrique (154) est stockée dans l'unité cryptographique, et où la clé privée est encryptée à l'aide de la clé symétrique par l'unité cryptographique de sorte qu'uniquement la clé privée encryptée est transmise au système informatique, et où la même clé symétrique est stockée dans les circuits intégrés, afin de décrypter la clé privée respective avant son stockage.

2. Procédé selon la revendication 1, dans lequel la clé symétrique est stockée dans les circuits électroniques intégrés respectifs chaque fois en tant que composant intégral d'un système de fonctionnement (134).

3. Procédé selon la revendication 1 ou 2, dans lequel la création des données de commande a lieu d'une part et la transmission des structures de données instanciées et signées et des clés privées associées d'autre part de manière asynchrone.

4. Procédé selon l'une des revendications précédentes, dans lequel la transmission des structures de données instanciées et signées et des clés privées associées respectives a lieu de manière sécurisée à partir du dispositif de personnalisation vers les documents par l'utilisation d'un procédé de messagerie sécurisée (160), notamment, moyennant l'emploi d'un encryptage et d'un objet de données MAC.

5. Système cryptographique pour la création de données de commande (112) pour un dispositif de personnalisation (114) pour la personnalisation de documents (132) avec
• des moyens (120) d'un environnement hautement sécurisé pour la création d'une paire de clés constituée d'une clé publique et d'une clé privée pour chacun des documents, qui présentent un composant cryptographique (118, 120) pour la création de la paire de clés, où le composant cryptographique présente des moyens (156) pour le cryptage de la clé privée, où, dans le composant cryptographique, est stockée une clé symétrique (154) pour le cryptage de la clé privée, où le composant cryptographique présente des moyens (122) pour la création d'une signature numérique (152),
• un système informatique de l'environnement hautement sécurisé comprenant
- des moyens (102) pour la réception de données d'entrée (110) pour la personnalisation des documents,
- des moyens (106) pour l'instanciation d'une structure de données prédéfinie constituée des données d'entrée et d'une clé publique pour chacun des documents,
- des moyens (108) pour la création de données de commande à partir des structures de données instanciées, lesquelles ont été signées, et des clés privées encryptées associées respectives,
• le dispositif de personnalisation pour la personnalisation des documents (132) comprenant
- des moyens (124) pour la réception de données de commande (112) à partir du système informatique,
- des moyens (126, 127 ; 160) pour la transmission des structures de données instanciées et signées et des clés privées encryptées associées respectives vers les documents pour l'exécution des données de commande de sorte que le stockage des structures de données instanciées a lieu chaque fois dans une région de stockage du circuit électronique intégré d'un document à personnaliser avec une condition d'accès, et la clé privée est stockée de telle manière dans une région de stockage du circuit électronique intégré qu'au accès externe n'est possible sur la clé privée,
• où chacun des documents présente un circuit électronique intégré (130) et comprend ce qui suit :
- une interface (128) pour la réception des structures de données (140) instanciées et signées et de la clé privée encryptée du dispositif de personnalisation (114),
- des moyens (134, 136) pour le stockage des données de personnalisation contenant les structures de données instanciées et signées dans une région de stockage (138) après vérification des signatures des structures de données, où le stockage a lieu moyennant une condition d'accès,
- des moyens (134, 154) pour le décryptage de la clé privée,
- des moyens (134, 136 ; 154) pour le stockage de la clé privée décryptée dans une région de stockage (138), où le stockage a lieu de telle manière qu'aucun accès externe n'est possible sur la clé privée.

6. Système cryptographique selon la revendication 5, dans lequel les moyens pour la transmission de structures de données et des clés privées associées respectives sont conçus pour l'exécution d'un procédé de messagerie sécurisée (160) de sorte que la transmission des structures de données instanciées et signées et des clés privées encryptées associées respectives a lieu vers les documents de manière sécurisée par le dispositif de personnalisation.

7. Système cryptographique selon la revendication 5 ou 6, dans lequel, dans un système de fonctionnement (134) du circuit électronique intégré, la clé symétrique (154) est à disposition pour le décryptage de la clé privée (142).

8. Système cryptographique selon la revendication 5, 6 ou 7, avec des moyens (134, 136) pour l'exécution d'un procédé de messagerie sécurisée pour une réception sécurisée des structures de données instanciées et signées et de la clé privée.

9. Système cryptographique selon l'une des revendications précédentes 5 à 8, chacun des documents comprenant en outre des moyens (134, 136) pour l'exécution d'un protocole cryptographique moyennant l'emploi de la clé privée, où la réalisation du protocole cryptographique est une condition nécessaire pour un accès externe sur au moins une partie des données de personnalisation.

10. Système cryptographique selon l'une des revendications précédentes 5 à 9, dans lequel, dans le cas du document, il s'agit d'un document de valeur ou de sécurité, par exemple, d'un document de voyage lisible par machine, notamment d'un passeport, d'une carte d'identité ou d'un visa, ou d'une carte d'entreprise, d'une carte de crédit, d'un permis de conduire ou d'un justificatif.
